# EUROPEAN PATENT APPLICATION

(11) **EP 1 259 014 A2**
(43) Date of publication of application: **20.11.2002**
(21) Application number: 01112244.7
(22) Date of filing: 18.05.2001
(51) Int. Cl.: H04J 14/02, H04Q 11/00

(54) **DWDM network**

(30) Priority: 06.03.2001 US 801088
(71) Applicant: Redfern Broadband Networks Inc., Wilmington, County of Newcastle, Delaware, 19801 (US)
(72) Inventor: The designation of the inventor has not yet been filed
(74) Representative: Müller, Jörg Uwe

(57) **Abstract**

A DWDM network supporting first bit rate data streams, the DWDM network comprising a plurality of network hubs interfacing to subscriber line connections, and a core hub for providing cross connections between the network hubs, wherein each of the network hubs comprises a first bi-directional multiplexing unit arranged to multiplex n subscriber data streams each having a second bit rate which is substantially 1/nth of the first bit rate into a single first bit rate data stream for distribution on the DWDM network, and wherein the core hub comprises a plurality of second bi-directional multiplexing units each for de-multiplexing one of the single first bit rate data streams originating from the network hubs into the subscriber data streams and a switching unit arranged to selectively cross-connect the individual subscriber data streams back to individual ones of the second multiplexing units for distribution of the subscriber data streams to their respective destination network hubs in single first bit rate data streams each comprising n multiplexed subscriber data streams destined for the same network hub.

## Description

### Field of the invention

The present invention relates broadly to a dense wavelength division multiplexing (DWDM) network and a method of distributing data on a DWDM network.

### Background of the invention

Individual subscribers of e.g. a metro dense wavelength division multiplexing (DWDM) network may each desire a connection whose bit rate is lower than the maximum bit rate supported by the individual DWDM channels of the network. In this case, greater efficiency may be achieved if multiple subscriber channels can be combined to utilise a single DWDM channel in the metro network.

In designing a system that facilitates such sharing of the DWDM channel resources it must also be considered that the subscribers will need to communicate to different locations within the metro network, or may require to communicate via e.g. a long haul network to which the metro network is connected.

At least preferred embodiments of the present invention seek to provide a method and apparatus for facilitating such connectivity in optical networks.

### Summary of the invention

In accordance with a first aspect of the present invention there is provided a DWDM network supporting first bit rate data streams; the DWDM network comprising a plurality of network hubs interfacing to subscriber line connections and a core hub for providing cross connections between the network hubs, wherein each of the network hubs comprises a first bi-directional multiplexing unit arranged to multiplex n subscriber data streams each having a second bit rate which is substantially 1/nth of the first bit rate into a single first bit rate data stream for distribution on the DWDM network, and wherein the core hub comprises a plurality of second bi-directional multiplexing units each for de-multiplexing one of the single first bit rate data streams originating from the network hubs into the subscriber data streams and a switching unit arranged to selectively cross-connect the individual subscriber data streams back to individual ones of the second multiplexing units for distribution of the subscriber data streams to their respective destination network hubs in single first bit rate data streams each comprising n multiplexed subscriber data streams destined for the same network hub.

In a preferred embodiment, the subscriber data streams are 1 Gbit/s Gigabit Ethernet (GbE) data streams, and the first bit rate data streams are 2.488 Gbit/s SONET/SDH (OC48) data streams.

Each of the first and second multiplexing unit may comprise a 2xGbE/OC48 Packet Over SONET (POS) multiplexer unit.

In another embodiment, each multiplexing unit may comprise a SONET time division multiplexing (TDM) multiplexer unit. Advantageously, the SONET TDM multiplexer units are arranged, in use, to first decode 1.25 Gbit/s 8b/10b encoded GbE streams to produce two 1 Gbit/s streams, and to then multiplex the two 1 Gbit/s streams into SONET Virtual Containers. Alternatively, the SONET TDM multiplexer units may be arranged, in use, to first decode the 1.25 Gbit/s 8b/10b encoded GbE streams to produce two 1 Gbit/s streams, and to then multiplex the two 1 Gbit/s streams into a SONET frame in alternate time slots. In such an embodiment, the SONET TDM multiplexer units are preferably arranged in a manner such that, in use, additional filler bytes are being inserted to match to the capacity of the SONET frame.

The SONET TDM multiplexer units may further be arranged in a manner such that, in use, the decoded GbE streams are being re-encoded utilising a 5b/6b line code to produce 1.2 Gbit/s streams, before employing the multiplexing into the 2.488 Gbit/s OC 48 data streams.

Each of the first and second multiplexing units advantageously comprises a tagging unit for tagging each incoming subscriber data stream, and for allocating a wavelength to each outgoing subscriber data stream based on tags on the incoming first bit rate data stream.

The first and/or second multiplexing units may each comprise a uni-directional multiplexing sub-unit and a uni-directional de-multiplexing sub-unit.

Preferably, each of the first multiplexing units and/or the second multiplexing units is incorporated in a Trunk Interface Card interfacing to the DWDM network.

The switching unit may further be arranged, in use, to selectively cross connect any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

The third bit rate may be substantially equal to the first bit rate. Preferably, the third bit rate data streams are 2.488 Gbit/s OC48 data streams.

In accordance with a second aspect of the present invention there is provided a core hub for providing cross connections between network hubs interfacing to subscriber line connections, the core hub comprising a plurality of bi-directional multiplexing units each for de-multiplexing one first bit rate data stream originating from one of the network hubs into n subscriber data streams having a bit rate which is substantially 1/nth of the first bit rate, and a switching unit arranged to selectively cross-connect the individual subscriber data streams back to individual ones of the multiplexing units for distribution of the subscriber data streams to their respective destination network hubs in single first bit rate data streams each comprising n multiplexed subscriber data streams destined for the same network hub.

In a preferred embodiment, the subscriber data streams are 1 Gbit/s Gigabit Ethernet (GbE) data streams, and the first bit rate data streams are 2.488 Gbit/s SONET/SDH (OC48) data streams.

Each of the multiplexing units advantageously comprises a'tagging unit for tagging each incoming subscriber data stream, and for allocating a wavelength to each outgoing subscriber data stream based on tags on the incoming first bit rate data stream.

The multiplexing units may each comprise a uni-directional multiplexing sub-unit and a uni-directional de-multiplexing sub-unit.

Preferably, each of the multiplexing units is incorporated in a Trunk Interface Card interfacing to the DWDM network.

The switching unit may further be arranged, in use, to selectively cross connect any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

The third bit rate may be substantially equal to the first bit rate. Preferably, the third bit rate data streams are 2.488 Gbit/s OC48 data streams.

In accordance with a third aspect of the present invention there is provided method of distributing data on a DWDM network supporting first bit rate data streams, the DWDM network comprising a plurality of network hubs interfacing to subscriber line connections and a core hub for providing cross connections between the network hubs, the method comprising the steps of at each network hub multiplexing n subscriber data streams each having a second bit rate which is substantially 1/nth of the first bit rate into a single first bit rate data stream for distribution on the DWDM network, at the core hub de-multiplexing the single first bit rate data streams originating from the network hubs into the subscriber data streams, multiplexing any n subscriber data streams into a single first bit rate data stream for distribution to a same one of the network hubs.

In a preferred embodiment, the subscriber data streams are 1 Gbit/s Gigabit Ethernet (GbE) data streams, and the first bit rate data streams are 2.488 Gbit/s SONET/SDH (OC48) data streams.

The method advantageously comprises the steps of at the network hubs and the core hub tagging each incoming subscriber data stream, and allocating a wavelength to each outgoing subscriber data stream based on tags on the incoming first bit rate data stream.

The method may further comprise the steps of at the core hub selectively cross connecting any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

The third bit rate may be substantially equal to the first bit rate. Preferably, the third bit rate data streams are 2.488 Gbit/s OC48 data streams.

### Brief description of the drawings

Preferred forms of the present invention will now be described, by way of example only, with reference to the accompanying drawings.

Figure 1 is a schematic drawing illustrating the connectivity in a metro ring network between two metro hubs and a core hub.

Figure 2 is a schematic drawing illustrating an OC48/2xGbE Integrated Trunk and Line Interface Card embodying the present invention.

Figure 3 is a schematic drawing illustrating the main functional components of an OC48/2xGbE Multiplexing Unit.

Figure 4 is a schematic drawing illustrating a core hub structure embodying the present invention.

Figure 5 is a schematic drawing illustrating an OC48/2xGbE Trunk Interface Card embodying the present invention.

Figure 6 is a functional block diagram of a metro hub structure corresponding to the metro hubs of Figure 1.

### Detailed description of the embodiments

The preferred embodiment described provides a DWDM network in which each DWDM channel carries a single 2.488 Gbit/s OC48 data stream which comprises two 1 Gbit/s GbE subscriber data streams, thereby reducing DWDM channel resource requirements or, in other words, increasing the number of subscriber lines per number of DWDM channels.

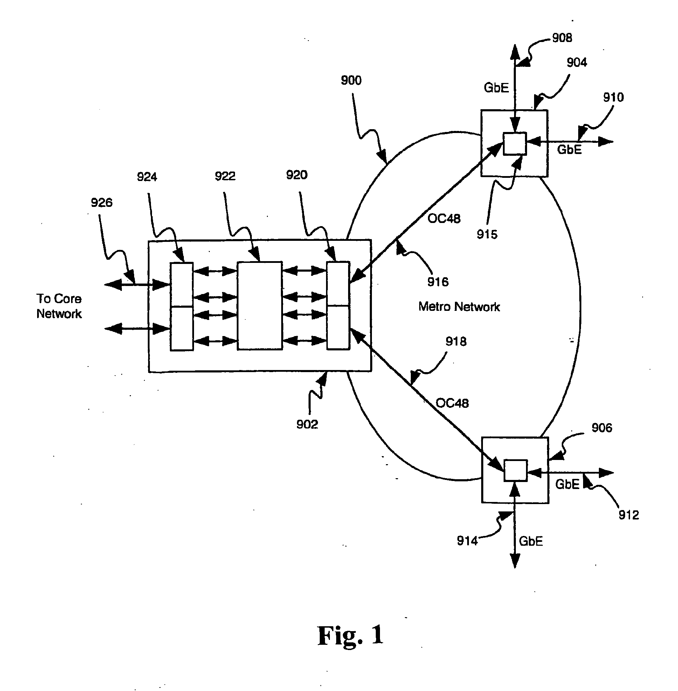

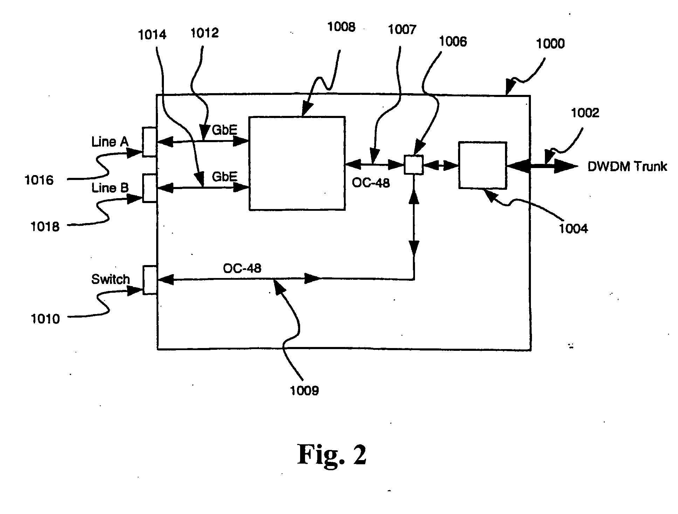

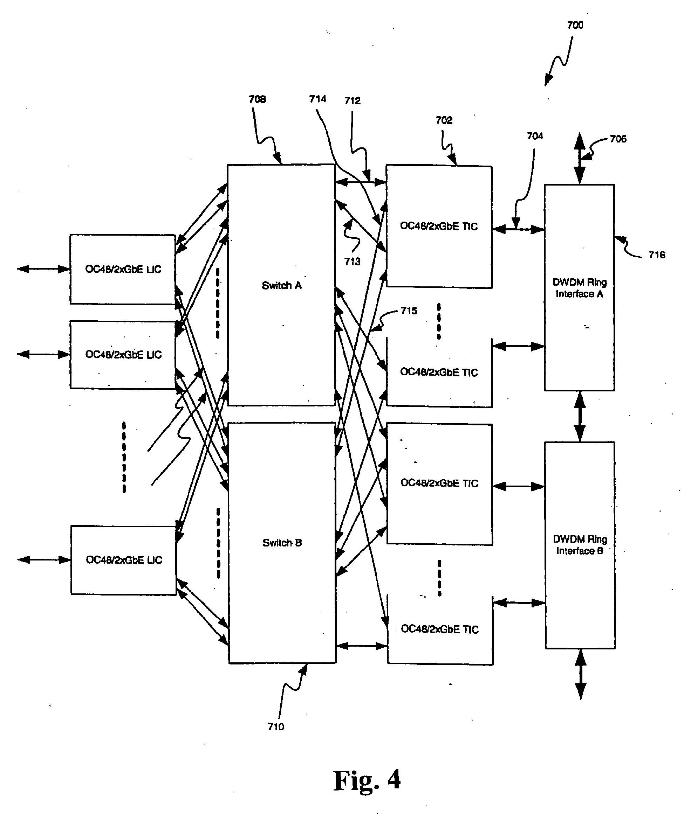

Figure 1 shows an exemplary configuration of a metro DWDM network 900 embodying the present invention. The DWDM network 900 comprises a core hub 902, described in more detail below with reference to Figure 4, and a plurality of metro hubs, exemplary metro hubs 904, 906 being shown in Figure 1. Each of the metro hubs 904, 906 has two subscriber GbE connections, 908 and 910 connected to the first metro hub 904, and 912 and 914 connected to the second metro hub 906. Each pair of subscriber GbE connections e.g. 908, 910 is interfaced to the metro DWDM network 900 via an OC48/2xGbE integrated Trunk and Line Card (TLC) e.g. 915, to be described in more detail below with reference to Figure 2. Each OC48/2xGbE TLC, e.g. 915, multiplexes two GbE streams onto a single OC48 DWDM channel e.g. 916. Accordingly, the connections between the metro hubs e.g. 904 and the core hub 902 of the metro DWDM network 620 are provided via 2.488 Gb/s DWDM channel connections e.g. 916.

In the exemplary case shown in Figure 1, a first GbE channel 908 and a second GbE channel 910 are combined at the first metro hub 904 to form a first OC48 channel 916. Additionally, a third GbE channel 912 and a fourth GbE channel 914 are combined at the second metro hub 906 to form a second OC48 channel 918. The two OC48 channels 916, 918 are transmitted to the core hub 902 where they are received on OC48/2xGbE Trunk Interface Card (TIC) units 920. The OC48/2xGbE TIC's 920 demultiplex the OC48 channels into their component GbE channels for switching in the cross-connect switch 922. Any individual GbE channel may be switched either to one of the OC48/2xGbE Line Interface Cards (LIC's) 924, or to one of the OC48/2xGbE TIC's 920, where it may be multiplexed along with a second independent GbE channel into a single 2.488 Gb/s OC48 channel interconnected to the core network via a short-haul connection e.g. 926, or to a metro hub via a DWDM connection e.g. 918.

Accordingly a system is provided wherein individual GbE channels e.g. 908 may be independently interconnected within the metro DWDM network 900, or across the core network (not shown) while utilising only 2.488 Gb/s OC48 channels for transmission.

Figure 2 shows the structure 1000 of an OC48/2xGbE TLC e.g. 915 in the form of a functional block diagram. A full duplex DWDM 2.488 Gb/s OC48 stream 1002 is connected from the metro DWDM network 900 (Figure 1) to a DWDM transceiver 1004. The transceiver 1004 may comprise a broadband receiver such as e.g. a semiconductor PIN detector, to receive the incoming OC48 channel. The transceiver 1004 may further comprise a suitable single-frequency DWDM laser for transmission of the outgoing DWDM 2.488 Gb/s OC48 signal into the network via the DWDM Ring Interface (not shown). Depending upon factors such as, e.g. the maximum transmission distance, this laser may be a relatively low-cost device, such as a directly modulated, temperature-stabilised distributed feedback (DFB) semiconductor laser. Alternatively the laser may be a more costly, higher-performance device, such as a DFB semiconductor laser incorporating an integrated external electro-absorption modulator (DFB-EA), and active wavelength stabilisation, in order to achieve longer transmission distance, or more closely spaced DWDM channels. In a further alternative embodiment, the DWDM laser source may be provided separately from the modulator.

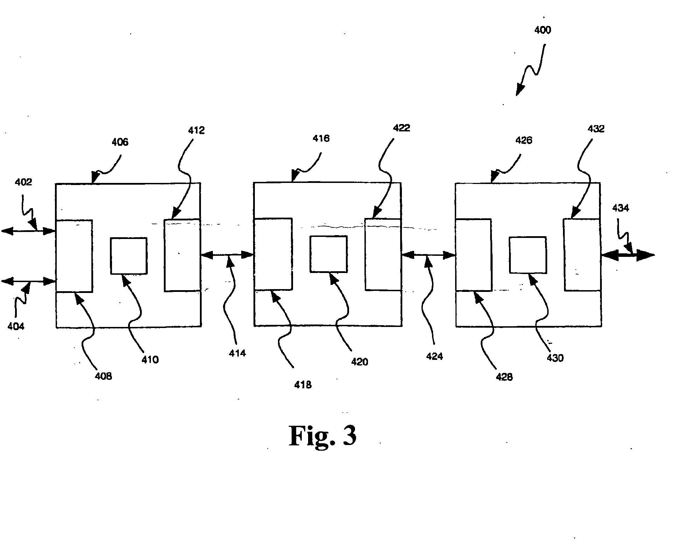

The DWDM transceiver 1004 is connected to an OC48/2xGbE multiplexing unit 1008 via an electronic switch 1006 and an electrical connection 1007. The function of the switch 1006 is to enable the OC48 channel 1007 to be switched to the alternate path 1009 in the case of e.g. a failure of the DWDM transceiver 1004. The alternate path 1009 may provide a connection to a cross-connect switch (not shown) via a short-haul optical transceiver 1010. The switch, if present, may enable the OC48 channel to be connected to an optional alternate Trunk Interface Card (not shown), which may be provided for the purpose of channel protection. The OC48/2xGbE multiplexing unit 1008 is shown in more detail in Figure 3.

Figure 3 shows a block diagram 400 of an exemplary embodiment of an OC48/2xGbE multiplexing unit e.g. 314, based on an application note provided in the product literature for the PMC-Sierra PM3386 S/UNI®-2xGE Dual Gigabit Ethernet Controller. The multiplexing unit 400 comprises three main components, being a dual Gigabit Ethernet controller 406, interface logic 416, and a 2.488 Gb/s SONET/SDH user network interface device 426. The dual Gigabit Ethernet controller 406 may comprise e.g. a PMC-Sierra PM3386 S/UNI®-2XGE Dual Gigabit Ethernet Controller integrated circuit (IC). The interface logic 416 may be implemented using e.g. a field programmable gate array (FPGA) device. The 2.488 Gb/s SONET/SDH user network interface device 426 may comprise e.g. a PMC-Sierra PM5381 S/UNI® SATURN® User Network Interface IC. It will be appreciated by a person skilled in the art that another chip-set may be used, e.g. a chip set that could provide a choice between 2xGbE/OC48 grooming and 4xOC12.OC48 grooming.

The dual Gigabit Ethernet controller 406 includes a serialiser/deserialiser unit 408 for converting the two GbE streams 402, 404 between serial and parallel formats. The dual Gigabit Ethernet controller 406 further includes a dual GbE Medium Access Control (MAC) unit for transmitting and receiving GbE packets on the two GbE streams 402, 404. The dual Gigabit Ethernet controller 406 further includes a Packet-Over-SONET Physical layer (POS-PHY) level 3 (PL3) Slave unit 412 for transmitting and receiving packets over the standard PL3 channel 414. The dual Gigabit Ethernet controller 406 further provides an in-band addressing function that enables the source port of each packet to be identified.

The interface logic 416 includes two PL3 Master units 418, 422 for transmitting and receiving packets on the two standard PL3 channels 414, 424 connected to the dual Gigabit Ethernet controller 406 and the 2.488 Gb/s SONET/SDH user network interface device 426. The interface logic further includes a buffering and processing functional unit 420, that provides a first-in first-out (FIFO) buffer function for data passing between the dual Gigabit Ethernet controller 406 and the SONET/SDH user network interface device 426. The buffering and processing functional unit 420 further provides an Ethernet over SONET/SDH (EOS) processing function. The EOS processing function may use the in-band addressing function of the Dual Gigabit Ethernet controller 406 to tag packets and ensure that they exit by the correct GbE port at the destination network element.

The 2.488 Gbit/s SONET/SDH user network interface device 426 includes a PL3 Slave unit 428 for transmitting and receiving packets over the standard PL3 channel 424. The user network interface device 426 further includes a SONET/SDH processing unit that provides SONET/SDH framing and path overhead functionality. The user network interface device 426 further includes a serialiser/deserialiser unit 432 for converting the 2.488 Gbit/s SONET/SDH stream 434 between parallel and serial formats.

Returning now to Figure 2, the two GbE channels 1012, 1014 of the OC48/2xGbE multiplexing unit 1008 are further connected to line interfaces comprising optical transceivers 1016, 1018. The optical transceivers 1016, 1018 may comprise e.g. 850 nm multimode GbE optical transceivers. The line interfaces may be connected to subscriber equipment via optical fibre connections (not shown).

In Figure 4, an arrangement 700 for the core hub 902 (Figure 1) is illustrated. The arrangement 700 comprises a plurality of OC48/2xGbE TIC e.g. 702. Each OC48/2xGbE TIC e.g. 702 is connected to a single 2.488 Gb/s OC48 DWDM channel e.g. 704, comprising two GbE channels multiplexed as described above with reference to Figure 3. Accordingly, the core hub 700 is now able to service the same number of GbE channels from the metro DWDM network 706 while utilising only half the number of DWDM connections as a DWDM network supporting only unmultiplexed GbE channels. Alternatively, up to twice the original number of GbE channels may be supported in the metro DWDM network 706 by utilising the same number of DWDM connections, with each connection comprising a 2.488 Gb/s OC48 channel carrying two multiplexed GbE channels.

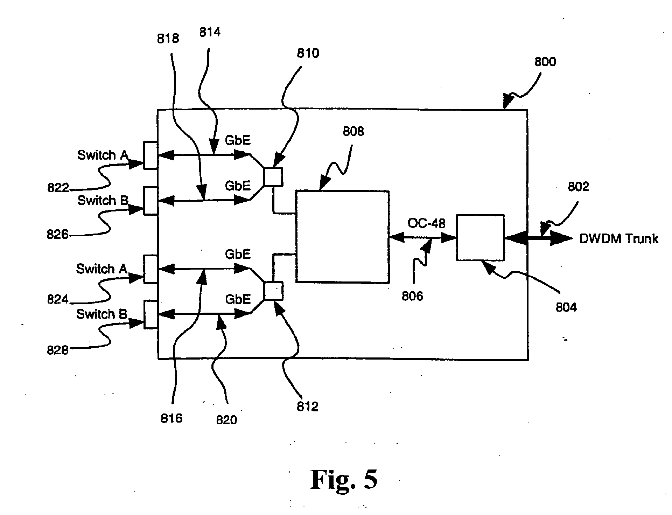

Figure 5 shows the structure 800 of an OC48/2xGbE TIC e.g. 702 in the form of a functional block diagram. A full duplex DWDM 2.488 Gb/s OC48 stream 802 is connected from the DWDM network 706 (Figure 4) to a DWDM transceiver 804. The transceiver 804 may comprise a broadband receiver such as e.g. a semiconductor PIN detector, to receive the incoming OC48 channel. The transceiver 804 may further comprise a suitable single-frequency DWDM laser for transmission of the outgoing DWDM 2.488 Gb/s OC48 signal into the network via the DWDM Ring Interface e.g 716 (Figure 4). Depending upon factors such as, e.g. the maximum transmission distance, this laser may be a relatively low-cost device, such as a directly modulated, temperature-stabilised distributed feedback (DFB) semiconductor laser. Alternatively the laser may be a more costly, higher-performance device, such as a DFB semiconductor laser incorporating an integrated external electro-absorption modulator (DFB-EA), and active wavelength stabilisation, in order to achieve longer transmission distance, or more closely spaced DWDM channels. In a further alternative embodiment, the DWDM laser source may be provided separately from the modulator.

The DWDM transceiver 804 is connected to an OC48/2xGbE multiplexing unit 808 via an electrical connection 806. The OC48/2xGbE multiplexing unit 808 may comprise components as described previously with reference to Figure 3. The two GbE channels of the OC48/2xGbE multiplexing unit 808 are further connected to electronic switches 810, 812 which switch the GbE streams to one of two pairs of paths i.e. 814, 816 or 818, 820. Each pair of paths is connected in use to two ports on one of two redundant cross-connect switches e.g. 708, 710 (Figure 4). The connections to the switches are via short-haul intra-office optical interconnects, e.g. 712, 713 or 714, 715 (Figure 4). Thus the OC48/2xGbE TIC comprises four further intra-office optical transceivers 822, 824, 826, 828. The intra-office optical transceivers may comprise e.g. 850 nm multimode GbE optical transceivers.

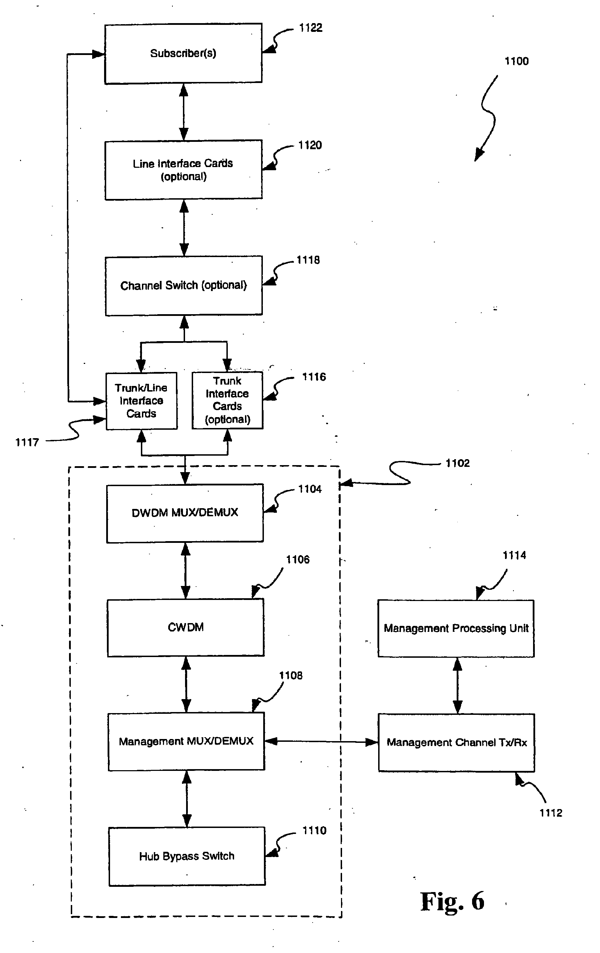

Figure 6 shows a functional block diagram 1100 of a metro hub structure required for deployment in the exemplary metro DWDM network 900 (Figure 1). The DWDM Ring Interface 1102 includes a DWDM Multiplexer/Demultiplexer (MUX/DEMUX) Unit 1104, a Coarse DWDM (CWDM) Unit 1106, a Management Channel MUX/DEMUX 1108 and a Hub Bypass Switch 1110. The Hub Bypass Switch 1110 provides the physical connection to the metro ring network, and enables the hub to be physically disconnected from the network. The Management MUX/DEMUX Unit 1108 is used to add and drop a single wavelength (at around 1510 nm in the exemplary embodiment) that is used as a network management channel. The data on the network management channel is processed by a Management Processing Unit 1114, connected to a Management Channel Tx/Rx Unit 1112 that is used to transmit and receive the 1510 nm optical management channel. The CWDM Unit 1106 adds and drops a specific band of wavelengths corresponding to the 16 DWDM channels multiplexed by the DWDM Ring Interface 1102, while expressing all other wavelengths back onto the metro DWDM network. The DWDM MUX/DEMUX Unit 1104 is used to multiplex and demultiplex the individual DWDM channels within this band. The DWDM MUX/DEMUX Unit 1104 is connected to the TLC's 1117 and/or optional TIC's 1116, the optional Channel Switch 1118, the optional Line Interface Cards 1120 and on to the subscribers' equipment 1122.

If present, the optional LIC's 1120 may provide independent line interfaces to subscribers 1122. If present, the optional TIC's 1116 may provide independent DWDM trunk interfaces to the metro DWDM network. In this case, the optional Channel Switch 1118 may provide reconfigurable connections between TIC's, LIC's and the protection path 1009 (Figure 2) provided on each TLC. Accordingly, the full configuration provides a metro hub in which connections may be dynamically established between subscribers and the DWDM trunk connections of the metro DWDM network. Additionally, the full configuration may provide for protection against the failure of e.g. DWDM transceivers on the TLC's 1117 through the provision of spare TIC's 1116. In a minimal configuration, full connectivity without protection may be provided to subscribers 1122 via the TLC's 1117 at reduced cost, since the LIC's 1120, Channel Switch 1118 and TIC's need not be deployed.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

For example, the present invention is not limited to GbE into OC48 grooming, but may applied for other data streams, including 4xOC12 into OC48 or 16xOC3 into OC48.

## Claims

1. A DWDM network supporting first bit rate data streams, the DWDM network comprising:
- a plurality of network hubs interfacing to subscriber line connections, and
- a core hub for providing cross connections between the network hubs,
wherein each of the network hubs comprises a first bi-directional multiplexing unit arranged to multiplex n subscriber data streams each having a second bit rate which is substantially 1/nth of the first bit rate into a single first bit rate data stream for distribution on the DWDM network,
and wherein the core hub comprises:
- a plurality of second bi-directional multiplexing units each for de-multiplexing one of the single first bit rate data streams originating from the network hubs into the subscriber data streams and
- a switching unit arranged to selectively cross-connect the individual subscriber data streams back to individual ones of the second multiplexing units for distribution of the subscriber data streams to their respective destination network hubs in single first bit rate data streams each comprising n multiplexed subscriber data streams destined for the same network hub.

2. A DWDM network as claimed in claim 1, wherein the subscriber data streams are 1 Gbit/s Gigabit Ethernet (GbE) data streams, and the first bit rate data streams are 2.488 Gbit/s SONET/SDH (OC48) data streams.

3. A DWDM network as claimed in claim 1, wherein each of the first and second multiplexing units comprises a tagging unit for tagging each incoming subscriber data stream, and for allocating a wavelength to each outgoing subscriber data stream based on tags on the incoming first bit rate data stream.

4. A DWDM network as claimed in claim 1, wherein the first and/or second multiplexing units each comprise a uni-directional multiplexing sub-unit and a uni-directional de-multiplexing sub-unit.

5. A DWDM network as claimed in claim 1, wherein each of the first multiplexing units and/or the second multiplexing units is incorporated in a Trunk Interface Card interfacing to the DWDM network.

6. A DWDM network as claimed in claim 1, wherein the switching unit is further arranged, in use, to selectively cross connect any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

7. A DWDM network as claimed in claim 6, wherein the third bit rate is substantially equal to the first bit rate.

8. A DWDM network as claimed in claim 7, wherein the third bit rate data streams are 2.488 Gbit OC48 data streams.

9. A DWDM network as claimed in claim 1, wherein each of the first and second multiplexing units comprises a 2xGbE/OC48 Packet Over SONET (POS) multiplexer unit.

10. A DWDM network as claimed in claim 1, wherein each multiplexing unit may comprise a SONET time division multiplexing (TDM) multiplexer unit.

11. A DWDM network as claimed in claim 10, wherein the SONET TDM multiplexer units are arranged, in use, to first decode 1.25 Gbit/s 8b/10b encoded GbE streams to produce two 1 Gbit/s streams, and to then multiplex the two 1 Gbit/s streams into SONET Virtual Containers.

12. A DWDM network as claimed in claim 10, wherein the SONET TDM multiplexer units are arranged, in use, to first decode the 1.25 Gbit/s 8b/10b encoded GbE streams to produce two 1 Gbit/s streams, and to then multiplex the two 1 Gbit/s streams into a SONET frame in alternate time slots.

13. A DWDM network as claimed in claim 12, wherein- the SONET TDM multiplexer units are arranged in a manner such that, in use, additional filler bytes are being inserted to match to the capacity of the SONET frame.

14. A DWDM network as claimed in claim 10, wherein the SONET TDM multiplexer units are further arranged in a manner such that, in use, the decoded GbE streams are being re-encoded utilising a 5b/6b line code to produce 1.2 Gbit/s streams, before employing the multiplexing into the 2.488 Gbit/s OC 48 data streams.

15. A core hub for providing cross connections between network hubs interfacing to subscriber line connections, the core hub comprising:
- a plurality of bi-directional multiplexing units each for de-multiplexing one first bit rate data stream originating from one of the network hubs into n subscriber data streams having a bit rate which is substantially 1/nth of the first bit rate, and
- a switching unit arranged to selectively-cross-connect the individual subscriber data streams back to individual ones of the multiplexing units for distribution of the subscriber data streams to their respective destination network hubs in single first bit rate data streams each comprising n multiplexed subscriber data streams destined for the same network hub.

16. A core hub as claimed in claim 15, wherein the subscriber data streams are 1 Gbit/s Gigabit Ethernet (GbE) data streams, and the first bit rate data streams are 2.488 Gbit/s SONET/SDH (OC48) data streams.

17. A core hub as claimed in claim 15, wherein each of the multiplexing units comprises a tagging unit for tagging each incoming subscriber data stream, and for allocating a wavelength to each outgoing subscriber data stream based on tags on the incoming first bit rate data stream.

18. A core hub as claimed in claim 15, wherein the multiplexing units may each comprise a uni-directional multiplexing sub-unit and a uni-directional de-multiplexing sub-unit.

19. A core hub as claimed in claim 15, wherein each of the multiplexing units is incorporated in a Trunk Interface Card interfacing to the DWDM network.

20. A core hub as claimed in claim 15, wherein The switching unit is further arranged, in use, to selectively cross connect any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

21. A core hub as claimed in claim 20, wherein the third bit rate is substantially equal to the first bit rate.

22. A core hub as claimed in claim 21, wherein the third bit rate data streams are 2.488 Gbit OC48 data streams.

23. A method of distributing data on a DWDM network supporting first bit rate data streams, the DWDM network comprising a plurality of network hubs interfacing to subscriber line connections and a core hub for providing cross connections between the network hubs, the method comprising the steps of:
- at each network hub multiplexing n subscriber data streams each having a second bit rate which is substantially 1/nth of the first bit rate into a single first bit rate data stream for distribution on the DWDM network,
- at the core hub de-multiplexing the single first bit rate data streams originating from the network hubs into the subscriber data streams, and
- at the core hub multiplexing any n subscriber data streams into a single first bit rate data stream for distribution to a same one of the network hubs.

24. A method as claimed in claim 23, wherein the subscriber data streams are 1 Gbit/s Gigabit Ethernet (GbE) data streams, and the first bit rate data streams are 2.488 Gbit/s SONET/SDH (OC48) data streams.

25. A method as claimed in claim 23, wherein the method comprises the steps of at the network hubs and the core hub tagging each incoming subscriber data stream, and allocating a wavelength to each outgoing subscriber data stream based on tags on the incoming first bit rate data stream.

26. A method as claimed in claim 23, wherein the method may further comprise the steps of at the core hub selectively cross connecting any m subscriber data streams originating from one or more of the network hubs of the DWDM network destined for any same one of a plurality of other network elements on a second network supporting third bit rate data steams, which are substantially a multiple m of the first bit rate, to one of a plurality of third multiplexing units of the core hub for multiplexing into a single third bit rate data stream for distribution to the same other network element.

27. A method as claimed in claim 26, wherein the third bit rate is substantially equal to the first bit rate.

28. A method as claimed in claim 27, wherein the third bit rate data streams are 2.488 Gbit OC48 data streams.
